# EUROPEAN PATENT SPECIFICATION

(11) **EP 4 143 752 B1**
(45) Date of publication and mention of the grant of the patent: **26.08.2026**
(21) Application number: 21808591.8
(22) Date of filing: 15.04.2021
(51) Int. Cl.: G06N 3/098

(54) **METHODS AND APPARATUSES FOR FEDERATED LEARNING**
VERFAHREN UND VORRICHTUNGEN FÜR FÖDERIERTES LERNEN
PROCÉDÉS ET APPAREILS PERMETTANT UN APPRENTISSAGE FÉDÉRÉ

(30) Priority: 22.05.2020 US 202016881999
(43) Date of publication of application: 08.03.2023
(73) Proprietor: Huawei Technologies Co., Ltd., Longgang District, Shenzhen, Guangdong 518129 (CN)
(72) Inventor: SHALOUDEGI, Kiarash, Québec H4W 1P4 (CA); YU, Yaoliang, Markham, Ontario L3R 5A4 (CA)
(74) Representative: Gill Jennings & Every LLP
(86) International application number: PCT/CN2021/087554
(87) International publication number: WO 2021/233030

(56) References cited:
- CN-A- 106 410 856
- CN-A- 109 103 901
- CN-A- 109 377 014
- CN-A- 109 886 478
- US-A1- 2017 109 322
- US-A1- 2017 109 322
- US-A1- 2019 050 743
- US-A1- 2019 050 743
- MING XIE ET AL: "Multi-Center Federated Learning", ARXIV.ORG, CORNELL UNIVERSITY LIBRARY, 201 OLIN LIBRARY CORNELL UNIVERSITY ITHACA, NY 14853, 3 May 2020 (2020-05-03), XP081657348
- OZAN SENER ET AL: "Multi-Task Learning as Multi-Objective Optimization", ARXIV.ORG, CORNELL UNIVERSITY LIBRARY, 201 OLIN LIBRARY CORNELL UNIVERSITY ITHACA, NY 14853, 11 January 2019 (2019-01-11), XP081064181
- FELIX SATTLER ET AL: "Clustered Federated Learning: Model-Agnostic Distributed Multi-Task Optimization under Privacy Constraints", ARXIV.ORG, CORNELL UNIVERSITY LIBRARY, 201 OLIN LIBRARY CORNELL UNIVERSITY ITHACA, NY 14853, 4 October 2019 (2019-10-04), XP081510830
- XI LIN ET AL: "Pareto Multi-Task Learning", ARXIV.ORG, CORNELL UNIVERSITY LIBRARY, 201 OLIN LIBRARY CORNELL UNIVERSITY ITHACA, NY 14853, 30 December 2019 (2019-12-30), XP081567905

## Description

### FIELD

The present disclosure relates to methods and apparatuses for training of a machine learning-based model, in particular related to methods and apparatuses for performing federated learning.

### BACKGROUND

Federated learning (FL) is a machine learning technique in which multiple edge computing devices (also referred to as client nodes) participate in training a machine learning algorithm to learn a centralized model (maintained at a central server) without sharing their local training dataset with the central server. Such local datasets are typically private in nature (e.g., photos captured on a smartphone, or health data collected by a wearable sensor). FL helps with preserving the privacy of such local datasets by enabling the centralized model to be learned without requiring the client nodes to share their local datasets with the central server. Instead, each client node performs localized training of the centralized model using a machine learning algorithm and its respective local dataset, and transmits an update to the centralized model back to the central server. The central node updates the centralized model based on the updates received from the client nodes. Successful practical implementation of FL in real-world applications would enable the large amount of data that is collected by client nodes (e.g. personal edge computing devices) to be leveraged for the purposes of learning the centralized model. A common approach for implementing FL is to average the parameters from each client node to arrive at a set of aggregated parameters.

A challenge for practical implementation of FL is how to reduce communication costs. Each round of training involves communication of the updated centralized model from the central server to each client node and communication of an update to the centralized model from each client node back to the central server. The larger the number of training rounds, the greater the communication costs. Existing techniques for achieving faster convergence of machine learning models may not be suitable for the unique context of FL.

Another challenge in FL is how to ensure fairness among client nodes. Fairness may be defined as ensuring that the learned centralized model should work equally well for all client nodes. This may be characterized as how to reduce the variance of error among client nodes.

It would be useful to provide methods and apparatuses that addresses at least some of the above challenges, and that may help to improve the simple averaging approach to FL.

MING XIE ET AL, "Multi-Center Federated Learning", ARXIV.ORG, CORNELL UNIVERSITY LIBRARY, 201 OLIN LIBRARY CORNELL UNIVERSITY ITHACA, NY 14853, (20200503), XP081657348 discloses a multi-center aggregation mechanism for federated learning, which learns multiple global models from non-IID (Independent and Identically Distributed) user data and simultaneously derives the optimal matching between users and centers.

### SUMMARY

In various examples, the present disclosure presents a federated learning method and system that may provide reduced communication costs and/or improved fairness among client nodes, compared to common FL approaches (e.g., federated averaging). The disclosed methods and apparatuses may provide faster convergence in FL.

The present disclosure describes examples in the context of FL, however it should be understood that disclosed examples may also be adapted for implementation of any distributed optimization or distributed learning. The invention is set out in independent claims 1, 7 and 15. Preferred aspects of the invention are set out in the dependent claims.

In a first aspect, the invention provides an apparatus according to claim 1.

In an implementation of the apparatus of the first aspect, the processing device may be configured to execute instructions to cause the apparatus to perform multi-objective optimization to calculate the set of weighting coefficients by using a multiple gradient descent algorithm (MGDA) towards the Pareto-stationary solution.

In the apparatus of the first aspect or any of the foregoing implementations thereof, the processing device may be configured to execute instructions to further cause the apparatus to: prior to calculating the set of weighting coefficients, normalize each update in the set of updates.

In the apparatus of the first aspect or any of the foregoing implementations thereof, the processing device may be configured to execute instructions to further cause the apparatus to: prior to calculating the set of weighting coefficients, reduce a total number of updates in the set of updates.

In the apparatus of the first aspect or any of the foregoing implementations thereof, the processing device may be configured to execute instructions to further cause the apparatus to reduce the total number of updates in the set of updates by: clustering the updates into a plurality of update clusters; determining, for each given update cluster, a group update representative of individual updates within the given update cluster; and replacing the updates in the set of updates with the determined group updates.

In the apparatus of the first aspect or any of the foregoing implementations thereof, the processing device may be configured to execute instructions to further cause the apparatus to perform multi-objective optimization to calculate the set of weighting coefficients by: calculating a set of inner products {*q_{i,i}, ... , q_{N,N}*}, the set of inner products comprising every pairwise inner product between two same or different updates in the set of updates, where *q_{i,j}* denotes the inner product between an *i*-th update and a *j*-th update in the set of updates, for integer values of *i* from 1 to *N* and integer values of *j* from 1 to *N, N* being an index indicating the respective client node; reshaping the set of inner products into a matrix denoted as *Q*, where the inner product *q_{i,j}* is an entry in an *i*-th column and *j*-th row of the matrix; and performing optimization to solve:
minimize *α^{T} Qα* subject to Σ*ᵢ αₗ* = 1, *αᵢ* ≥ 0 for all i
where *α* is a vector representing the set of weighting coefficients, and *αᵢ* is the *i-*th entry in the vector.

In the apparatus of the first aspect or any of the foregoing implementations thereof, the processing device may be configured to execute instructions to further cause the apparatus to: select a set of respective client nodes from which to obtain the set of updates.

In the apparatus of the first aspect or any of the foregoing implementations thereof, the processing device may be configured to execute instructions to further cause the apparatus to obtain the set of updates by: receiving, from the respective client nodes, the respective learned local models; and calculating the set of updates, wherein each update is calculated as the respective difference between the respective learned local model and the global model.

In the apparatus of the first aspect or any of the foregoing implementations thereof, the set of updates may include a set of gradient vectors, each gradient vector representing the respective difference between the respective learned local model and the global model.

In the apparatus of the first aspect or any of the foregoing implementations thereof, the processing device may be configured to execute instructions to further cause the apparatus to: transmit the updated global model to the same or different respective client nodes; and repeat the obtaining and updating to further update the updated global model. The transmitting and repeating may be further repeated until a predefined end condition is satisfied.

In a second aspect, the invention provides a computer-implemented method according to claim 7.

The method may include any of the steps implemented by any of the implementations of the apparatus described above.

### BRIEF DESCRIPTION OF THE DRAWINGS

Reference will now be made, by way of example, to the accompanying drawings which show example embodiments of the present application, and in which:
FIG. 1 is a block diagram of an example system that may be used to implement federated learning;
FIG. 2 is a block diagram of an example computing apparatus that may be used to implement examples described herein;
FIG. 3 is a block diagram illustrating an example implementation of a federated learning system, in accordance with examples described herein;
FIG. 4 is a block diagram illustrating further details of an example implementation of a federated learning system, in accordance with examples described herein;
FIG. 5 is a flowchart illustrating an example method for learning a global model at a central node, using federated learning; and
FIGS. 6A and 6B illustrate some results of simulations comparing an example of the present disclosure with a conventional federated learning approach.

Similar reference numerals may have been used in different figures to denote similar components.

### DESCRIPTION OF EXAMPLE EMBODIMENTS

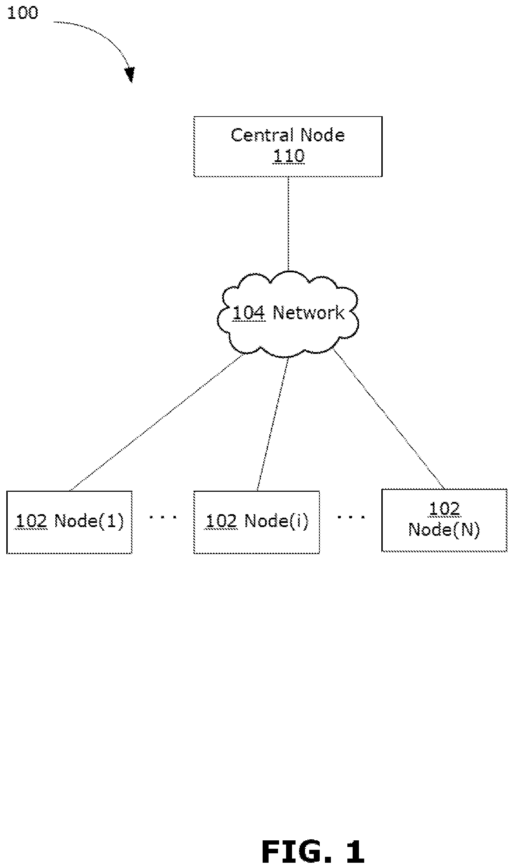

In examples disclosed herein, methods and apparatuses are described that help to enable practical application of federated learning (FL). The disclosed examples may help to address challenges that are unique to FL. To assist in understanding the present disclosure, FIG. 1 is first discussed.

FIG. 1 illustrates an example system 100 that may be used to implement FL. The system 100 has been simplified in this example for ease of understanding; generally, there may be more entities and components in the system 100 than that shown in FIG. 1.

The system 100 includes a plurality of client nodes 102, each of which collects and stores respective sets of local data (also referred to as local datasets). Each client node 102 can run a machine learning algorithm to learn a local model using a set of local data. For the purposes of the present disclosure, running a machine learning algorithm at a client node 102 means executing computer-readable instructions of a machine learning algorithm to update parameters of a local model. Examples of machine learning algorithms include supervised learning algorithms, unsupervised learning algorithms, and reinforcement learning algorithms. For generality, there may be *N* client nodes 102 (N being any integer larger than 1) and hence *N* sets of local data. The sets of local data are typically unique and distinct from each other, and it may not be possible to infer the characteristics or distribution of any one set of local data based on any other set of local data. A client node 102 may be an end user device (which may include such devices (or may be referred to) as a client device/terminal, user equipment/device (UE), wireless transmit/receive unit (WTRU), mobile station, fixed or mobile subscriber unit, cellular telephone, station (STA), personal digital assistant (PDA), smartphone, laptop, computer, tablet, wireless sensor, wearable device, smart device, machine type communications device, smart (or connected) vehicles, or consumer electronics device, among other possibilities), or may be a network device (which may include (or may be referred to as) a base station (BS), router, access point (AP), personal basic service set (PBSS) coordinate point (PCP), eNodeB, or gNodeB, among other possibilities). In the case where a client node 102 is an end user device, the local data at the client node 102 may be data that is collected or generated in the course of real-life use by user(s) of the client node 102 (e.g., captured images/videos, captured sensor data, captured tracking data, etc.). In the case where a client node 102 is a network device, the local data at the client node 102 may be data that is collected from end user devices that are associated with or served by the network device. For example, a client node 102 that is a BS may collect data from a plurality of user devices (e.g., tracking data, network usage data, traffic data, etc.) and this may be stored as local data on the BS.

The client nodes 102 communicate with the central node 110 via a network 104. The network 104 may be any form of network (e.g., an intranet, the Internet, a P2P network, a WAN and/or a LAN) and may be a public network. Different client nodes 102 may use different networks to communicate with the central node 110, although only a single network 104 is illustrated for simplicity.

The central node 110 may be used to learn a shared centralized model (referred to hereinafter as global model) using FL. The central node 110 may include a server, a distributed computing system, a virtual machine running on an infrastructure of a datacenter, or infrastructure (e.g., virtual machines) provided as a service by a cloud service provider, among other possibilities. Generally, the central node 110 (including the federated learning system 200 discussed further below) may be implemented using any suitable combination of hardware and software, and may be embodied as a single physical apparatus (e.g., a server) or as a plurality of physical apparatuses (e.g., multiple machines sharing pooled resources such as in the case of a cloud service provider). As such, the central node 110 may also generally be referred to as a computing system or processing system. The central node 110 may implement techniques and methods to learn the global model using FL as described herein.

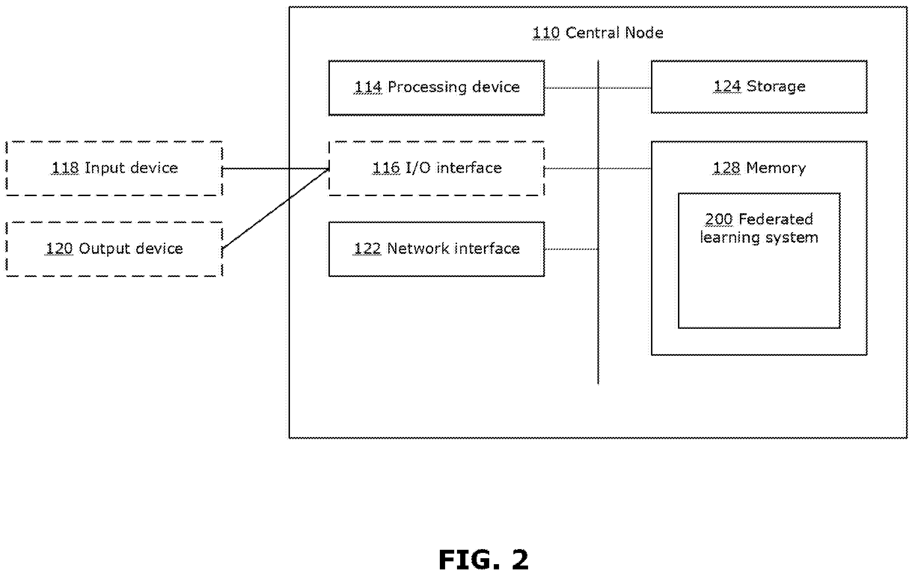

FIG. 2 is a block diagram illustrating a simplified example implementation of the central node 110 in the form of a computing apparatus, such as a server or virtual machine running on an infrastructure of a datacenter or infrastructure provided by a cloud computing platform. Other examples suitable for implementing embodiments described in the present disclosure may be used, which may include components different from those discussed below. Although FIG. 2 shows a single instance of each component, there may be multiple instances of each component in the server.

The computing apparatus (e.g. central node 110) may include one or more processing devices 114, such as a processor, a microprocessor, a digital signal processor, an application-specific integrated circuit (ASIC), a field-programmable gate array (FPGA), a dedicated logic circuitry, a dedicated artificial intelligence processor unit, a tensor processing unit, a neural processing unit, a hardware accelerator, or combinations thereof. The server may also include one or more optional input/output (I/O) interfaces 116, which may enable interfacing with one or more optional input devices 118 and/or optional output devices 120.

In the example shown, the input device(s) 118 (e.g., a keyboard, a mouse, a microphone, a touchscreen, and/or a keypad) and output device(s) 120 (e.g., a display, a speaker and/or a printer) are shown as optional and external to the server. In other examples, there may not be any input device(s) 118 and output device(s) 120, in which case the I/O interface(s) 116 may not be needed.

The computing apparatus (e.g. the central node 110) may include one or more network interfaces 122 for wired or wireless communication with the network 104, the client nodes 102, or other entity in the system 100. The network interface(s) 122 may include wired links (e.g., Ethernet cable) and/or wireless links (e.g., one or more antennas) for intra-network and/or inter-network communications.

The computing apparatus (e.g. the central node 110) may also include one or more storage units 124, which may include a mass storage unit such as a solid state drive, a hard disk drive, a magnetic disk drive and/or an optical disk drive.

The computing apparatus (e.g. the central node 110) may include one or more memories 128, which may include a volatile or non-volatile memory (e.g., a flash memory, a random access memory (RAM), and/or a read-only memory (ROM)). The non-transitory memory(ies) 128 may store instructions for execution by the processing device(s) 114, such as to carry out examples described in the present disclosure. The memory(ies) 128 may include other software instructions, such as for implementing an operating system and other applications/functions. In some examples, the memory(ies) 128 may include software instructions for execution by the processing device 114 to implement a federated learning system 200 (for performing FL), as discussed further below. In some examples, the server may additionally or alternatively execute instructions from an external memory (e.g., an external drive in wired or wireless communication with the server) or may be provided executable instructions by a transitory or non-transitory computer-readable medium. Examples of non-transitory computer readable media include a RAM, a ROM, an erasable programmable ROM (EPROM), an electrically erasable programmable ROM (EEPROM), a flash memory, a CD-ROM, or other portable memory storage.

Federated learning (FL) is a machine learning technique that may be confused with, but is clearly distinct from, distributed optimization techniques. FL exhibits unique features (and challenges) that distinguish FL from general distributed optimization techniques. For example, in FL, the numbers of client nodes involved is typically much higher than the numbers of client nodes in most distributed optimization problems. As well, in FL, the distribution of the local data collected at respective different client nodes are typically non-identical (this may be referred to as the data at different client nodes having non-i.i.d. distribution, where i.i.d. means "independent and identically distributed"). In FL, there may be a large number of "straggler" client nodes (meaning client nodes that are slower-running, which are unable to send updates to a central node in time and which may slow down the overall progress of the system). Also, in FL, the amount of local data collected and stored on respective different client nodes may differ significantly among different client nodes (e.g., differ by orders of magnitude). These are all features of FL that are typically not found in general distributed optimization techniques, and that introduce unique challenges to practical implementation of FL. In particular, the non-i.i.d. distribution of local data across different client nodes means that many algorithms that have been developed for distributed optimization are not suitable for use in FL.

Typically, FL involves multiple rounds of training, each round involving communication between the central node 110 and the client nodes 102. An initialization phase may take place prior to the training phase. In the initialization phase, the global model is initialized and information about the global model (including the model architecture, the machine learning algorithm that is to be used to learn the model parameters, etc.) is communicated by the central node 110 to all of the client nodes 102. At the end of the initialization phase, the central node 110 and all of the client nodes 102 each have the same initialized model, with the same architecture and model parameters. After initialization, the training phase may begin.

During the training phase, only model parameters need to be communicated between the client nodes 102 and the central node 110. A single round of training is now described. At the beginning of the round of training, the central node 110 sends the current global model to a plurality of client nodes 102 (e.g., a selected fraction from the total client nodes 102). The current global model may be a previously updated global model (e.g., the result of a previous round of training). Each selected client node 102 receives a copy of the global model (which may be stored as a local model on the client node 102) and uses its respective set of local data to train the local model, using a machine learning algorithm. The respective updated local models (or difference between the global model and the updated local model) are sent back to the central node 110 by each of the selected client nodes 102. After receiving the updated local models (or differences) from the client nodes 102, the central node 110 aggregates the received updated local models (or differences) to update the global model. The updates sent from the client nodes 102 to the central node may be respective sets of model parameters. Updating the global model may be performed by replacing the previous parameters (e.g., weights) of the global model with an aggregation of the received updates, for example. Another example way to update the global model may be by adding the aggregation of the received updates to the previous parameters of the global model. In some cases, FL may use gradient information to perform updating of the global model. Such examples may be referred to as gradient-based FL. A common approach for aggregating the received updates and updating the global model may be simply based on a simple average of the received updated local models (or differences). Such an approach is referred to as "FederatedAveraging" (or more simply "FedAvg") and is described, for example, by McMahan et al. ("Communication-efficient learning of deep networks from decentralized data," AISTATS, 2017). The updated global model is stored at the central node 110, and this may be considered the end of the round of training.

As will be appreciated by one skilled in the art, communication between the central node 110 and the client nodes 102 is associated with communication cost. Communication and its related costs is a challenge that may limit practical application of FL. Communication cost can be defined in various ways. For example, communication cost may be defined in terms of the number of rounds required to update the global model until the global model reaches an acceptable performance level. Communication cost may also be defined in terms of the amount of data (e.g., number of bytes) transferred between the global and local models before the global model converges to an acceptable solution. Generally, it is desirable to reduce or minimize the communication cost, in order to reduce the use of network resources, processing resources (at the client nodes 102 and/or the central node 110) and/or monetary costs (e.g., the monetary cost associated with network use).

In examples described herein, the communication cost may be reduced by reducing the number of communication rounds between the central node 110 and the client nodes 102. Reducing communication rounds in the context of stochastic optimization is usually achieved through developing variance reduction techniques. In the optimization literature, there are examples of variance reduction techniques that work well in the context of traditional distributed optimization such as Distributed Approximate NEwton (DANE) (e.g., as described by Shamir et al. in "Communication-efficient distributed optimization using an approximate newton-type method," ICML, 2014) and Stochastic Variance Reduced Gradient (SVRG) (e.g., as described by Johnson et al. in "Accelerating stochastic gradient descent using predictive variance reduction," NIPS, 2013). However, variance reduction techniques that have been developed for traditional distributed optimization are not suitable for use in FL, because FL has unique challenges (such as the non-i.i.d. nature of the local data stored at different client nodes 102).

Another challenge in FL is the problem of ensuring fairness among client nodes 102. In this disclosure, fairness may be defined as reducing the variance of error among different client nodes 102. In other words, the learned global model should work well for all the client nodes 102. A global model that is not fair across all client nodes 102 may be the result of skewed local data. There are several examples in practice in which the learned global model is biased or unfair against some under-represented groups. For example, most of the current smartphone users are young people, which biases the local data at the client nodes 102 in favor of a younger demographic. The result is that the learned global model may be biased toward the younger demographic (and against the older demographic). In another example, there might be geographical regions (e.g., certain countries, or rural areas) in which client nodes 102 send less updates to the central node 110 (e.g., due to poor wireless connection, or due to sparsity of users), which might result in a learned global model that is biased in favor of better-connected regions. In example embodiments provided herein, a method for FL is described in which weighting coefficients are assigned to local updates such that the update of the global model drives the learned global model towards a solution that is fair towards every client node 102.

To assist in understanding the present disclosure, some notation is introduced. As previously introduced, *N* is the number of client nodes 102. Although not all of the client nodes 102 may necessarily participate in a given round of training, for simplicity it will be assumed that *N* client nodes 102 participate in a current round of training, without loss of generality. Values relevant to a current round of training is denoted by the subscript *t,* values relevant to the previous round of training is denoted by the subscript *t-1,* and values relevant to the next round of training is denoted by the subscript *t+1.* The global model (stored at the central node 110) that is learned from the current round of training is denoted by *wₜ*. The local model that is learned at the *i*-th client node from the current round of training is denoted by *w^{j}ₜ;* and the update from the *i*-th client node in the current round of training is in the form of a gradient vector denoted by ${g}_{t}^{i}$, where *i* is an index from 1 to *N,* to indicate the respective client node 102. The gradient vector (also referred to as the update vector or simply the update) ${g}_{t}^{i}$ is generally calculated as the difference between the global model that was sent to the client nodes 102 at the start of the current round of training (which may be denoted as *wₜ₋₁,* to indicate that the global model was the result of a previous round of training) and the learned local model *w^{j}ₜ* (learned using the local dataset at the *i*-th client node). In particular, the update ${g}_{t}^{i}$ may be calculated by taking the difference or gradient between the parameters (e.g., weights) of the learned local mode *w^{j}ₜ* and the parameters of the previous global model *wₜ₋₁*. The update ${g}_{t}^{i}$ may be calculated at the *i*-th client node and transmitted to the central node 110; or the *i*-th client node may transmit information about its locally learned model to the central node 110 (e.g., the set of parameters of the learned local model *w^{j}ₜ*) and the central node 110 performs the calculation of the update ${g}_{t}^{i}$*.* As well, the form of the update transmitted from a given client node 102 to the central node 110 may be different from the form of the update transmitted from another client node 102 to the central node 110. Generally, the central node 110 obtains the set of updates $\left\{{g}_{t}^{1},…,{g}_{t}^{N}\right\}$ in the current round of training, whether the updates are calculated at the client nodes 102 or at the central node 110.

In the conventional FedAvg approach, the global model is updated by taking the simple average of the updates as follows: ${w}_{t} = {w}_{t - 1} + \frac{1}{N} {\sum }_{k = 1}^{N} {g}_{t}^{k}$

This basic approach may be generalized by applying a set of weighting coefficients (or simply "coefficients") $\left\{{α}_{t}^{1},…,{α}_{t}^{N}\right\}$ to update the global model using a weighted average of the updates, as follows: ${w}_{t} = {w}_{t - 1} + {\sum }_{k = 1}^{N} {α}_{t}^{k} {g}_{t}^{k}$

In the case where a set of coefficients is used, the determination of the coefficient to ${α}_{t}^{i}$ apply for each update ${g}_{t}^{i}$ is not trivial and is expected to impact the success in addressing the challenges of FL (e.g., issues of fairness, number of rounds for convergence).

In the present disclosure, examples are described for calculating the set of coefficients $\left\{{α}_{t}^{1},…,{α}_{t}^{N}\right\}$ such that the weighted average of the updates is in the direction of a Pareto-stationary solution. This means that the global model is driven to converge to a Pareto-stationary solution. To understand the concept of Pareto-stationary, the concept of Pareto-optimality is first discussed. Pareto-optimality is a solution in which a state having multiple objectives cannot be modified to improve any one objective without compromising any other objective. In the context of FL, a Pareto-optimal solution would mean that the learned global model works well for all client nodes 102 involved in the training rounds (but is not necessarily optimized for all client nodes 102). However, a Pareto-optimal solution may be difficult to find. A Pareto-stationary solution may be easier to find, which may be beneficial for more efficient use of processing resources at the central node 110. Paretostationarity may be defined as follows:

The smooth criteria *lᵢ*(*θ*) (1 ≤ *i* ≤ *n* ≤ N) are said to be Pareto-stationary at the design point *θ*⁰ if and only if there exists a convex combination of the gradient vectors, ${g}_{i}^{0} = ∇ {l}_{i} \left({θ}^{0}\right)$, that is equal to zero, expressed mathematically as follows: ${\sum }_{i}^{n} {α}_{i} {g}_{i}^{0} = 0 , {α}_{i} \geq 0 \left(∀i\right) , {\sum }_{i}^{n} {α}_{i} = 1$ where *lᵢ*(*θ*) is some loss function for the *i*-th client node 102, and *θ* is a set of parameters for the loss function. Generally, the goal of training the global model is to minimize (or at least reduce) *lᵢ*(*θ*) across all *N* client nodes 102.

Conceptually, a Pareto-stationary solution means that, given multiple objectives (e.g., where minimization the loss function for each client node 102 is a respective objective), there is a linear combination of the derivatives (or gradients) of the objectives that is equal to zero. A solution that is Pareto-optimal is also Pareto-stationary, but the reverse is not necessarily true.

The present disclosure describes examples that promote the global model learned using FL to converge on a Pareto-stationary solution. Such an approach may enable the global model to be fair to across all client nodes 102 involved in the training rounds, enable efficient convergence of the global model and/or enable efficient use of network and processing resources (e.g., processing resources at the central node 110, processing resources at each selected client node 102, and wireless bandwidth resources at the network).

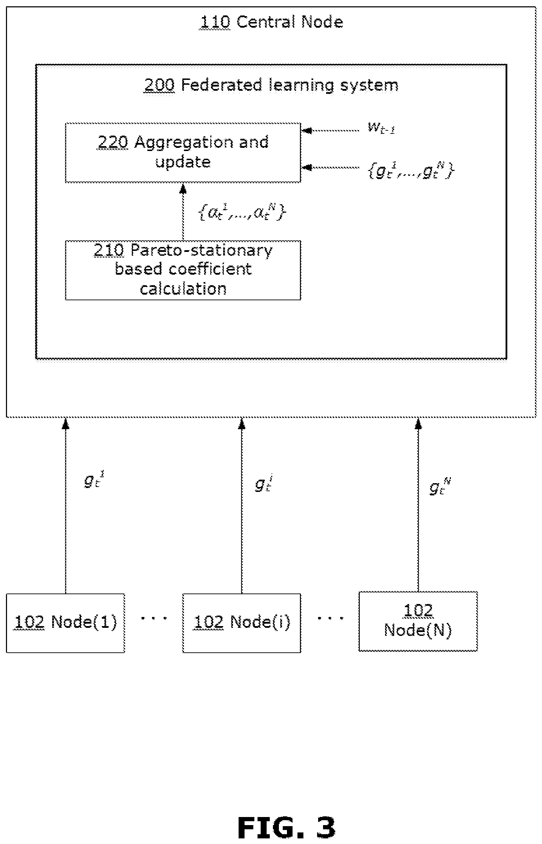

FIG. 3 is a block diagram illustrating some details of the federated learning system 200 implemented in the central node 110. For simplicity, the network 104 has been omitted from FIG. 3. The federated learning system 200 may be implemented using software (e.g., instructions for execution by the processing device(s) 114 of the central node 110), using hardware (e.g., programmable electronic circuits designed to perform specific functions), or combinations of software and hardware.

The federated learning system 200 includes a Pareto-stationary based coefficient calculation block 210 and an aggregation and update block 220. Although the federated learning system 200 is illustrated and described with respect to blocks 210, 220, it should be understood that this is only for the purpose of illustration and is not intended to be limiting. For example, the functions of the federated learning system 200 may not be split into blocks 210, 220, and may instead be implemented as a single function. Further, functions that are described as being performed by one of the blocks 210, 220 may instead be performed by the other of the blocks 210, 220.

In FIG. 3, example data generated in one round of training is also indicated. For simplicity, the initial transmission of the previous-round global model *wₜ₋₁,* from the central node 110 to the client nodes 102, is not illustrated. Further, the update sent from each client node 102 to the central node 110 is shown as the gradient vector ${g}_{t}^{i}$*,* however as discussed above the client nodes 102 may transmit an update to the central node 110 in other forms (e.g., as a set of coefficients of a locally-learned model).

The set of updates $\left\{{g}_{t}^{1},…,{g}_{t}^{N}\right\}$ is provided to the Pareto-stationary based coefficient calculation block 210 to calculate a set of coefficients $\left\{{α}_{t}^{1},…,{α}_{t}^{N}\right\}$, in order to direct the global model towards a Pareto-stationary solution. Further details of the Pareto-stationary based coefficient calculation block 210 will be discussed below. The calculated set of coefficients $\left\{{α}_{t}^{1},…,{α}_{t}^{N}\right\}$ is provided to the aggregation and update block 220, which uses the updates $\left\{{g}_{t}^{1},…,{g}_{t}^{N}\right\}$ and the coefficients $\left\{{α}_{t}^{1},…,{α}_{t}^{N}\right\}$ to update the previously-learned parameters (e.g., weights) of the global model *wₜ₋₁,* using a weighted average: ${w}_{t} = {w}_{t - 1} + {\sum }_{k = 1}^{N} {α}_{t}^{k} {g}_{t}^{k}$

The updated global model *wₜ* is then stored as the current global model. The federated learning system 200 may make a determination of whether training of the global model should end. For example, the federated learning system 200 may determine that the global model learned during the current round of training has converged. For example, the set of parameters of the global model *wₜ* learned in the current round of training may be compared to the set of parameters of the global model *wₜ₋₁* learned in the previous round of training (or the comparison may be made to an average of previous parameters, calculated using a moving window), to determine if the two sets of parameters are substantially the same (e.g., within 1% difference). The training of the global model may end when a predefined end condition is satisfied. An end condition may be whether the global model has converged. For example, if the set of parameters of the global model *wₜ* learned in the current round of training is sufficiently converged, then FL of the global model may end. Alternatively or additionally, another end condition may be that FL of the global model may end if a predefined computational budget and/or computational time has been reached (e.g., a predefined number of training rounds has been carried out).

Details of the Pareto-stationary based coefficient calculation block 210 are now discussed. Various approaches may be used to calculate the set of coefficients $\left\{{α}_{t}^{1},…,{α}_{t}^{N}\right\}$, in order to direct the learned global model towards a Pareto-stationary solution. In examples described herein, a multiple gradient descent algorithm (MGDA) approach is used. MGDA is a technique that has been described for multi-objective optimization (e.g., by Désidéri, "Multiple-Gradient Descent Algorithm (MGDA)," [Research Report] RR-6953, 2009, inria-00389811v2f, 2009). MGDA is suitable for use in finding a Pareto-stationary set of coefficients for the learned global model in gradient-based FL. Based on MGDA, the set of coefficients $\left\{{α}_{t}^{1},…,{α}_{t}^{N}\right\}$ may be calculated by solving the optimization problem: ${min}_{α} {\left‖{\sum }_{i}^{n} {α}_{i} {g}^{i}\right‖}^{2} subject to {α}_{i} \geq 0 \left(∀i\right) , {\sum }_{i}^{n} {α}_{i} = 1$

Conceptually, finding this minimization may be considered equivalent to finding a minimum-norm point in the convex hull of the set of input points. Various techniques may be used to solve this minimization, for example using convex optimization techniques such as Frank-Wolfe type solvers (which is an iterative first-order optimization algorithm designed for constrained convex optimization), among other possibilities.

The Pareto-stationary based coefficient calculation block 210 may be implemented by performing optimization using MGDA. In some examples, the Pareto-stationary based coefficient calculation block 210 may thus be referred to as a MGDA block.

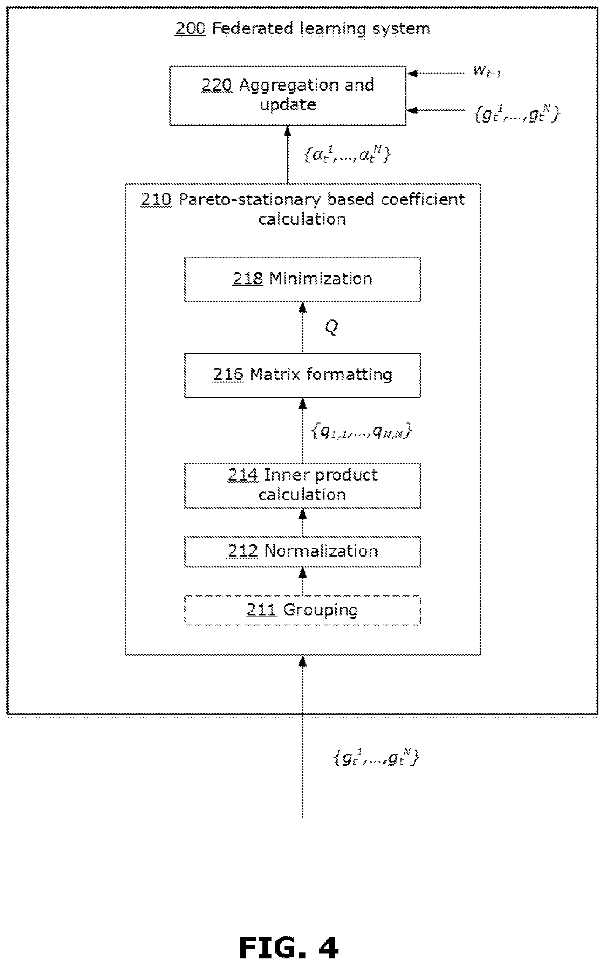

FIG. 4 is a block diagram of the federated learning system 200, showing further example details of the Pareto-stationary based coefficient calculation block 210.

In this example, the Pareto-stationary based coefficient calculation block 210 includes an optional grouping block 211, a normalization block 212, an inner product calculation block 214, a matrix formatting block 216, and a minimization block 218. Although the Pareto-stationary based coefficient calculation block 210 is illustrated and described with respect to blocks 211, 212, 214, 216, 218, it should be understood that this is only for the purpose of illustration and is not intended to be limiting. For example, the functions of the Pareto-stationary based coefficient calculation block 210 may not be split into blocks 211, 212, 214, 216, 218, and may instead be implemented as a single function. Further, functions that are described as being performed by one of the blocks 211, 212, 214, 216, 218 may instead be performed by one or more other blocks 211, 212, 214, 216, 218.

The optional grouping block 211 is first described. The grouping block 211 may include operations that are used to reduce the number of updates received from a larger number *M* to some smaller number *N.* That is, the grouping block 211 serves to convert the received set of updates $\left\{g{′}_{t}^{1},…,g{′}_{t}^{M}\right\}$ to a reduced set of updates $\left\{{g}_{t}^{1},…,{g}_{t}^{N}\right\}$, where *M>N* (it should be noted that $g {′}_{t}^{i}$ is not necessarily equal or equivalent to ${g}_{t}^{i}$). For example, there may be a very large number *M* (e.g., on the order of tens of thousands) of client nodes 102 transmitting respective updates to the central node 110. In practice, it might not be feasible (or even desirable) to calculate a set of *M* coefficients for all *M* client nodes 102. For example, calculation of such a large set of coefficients may require excessive use of processing resources at the central node 110 and/or may require a long time to calculate. The grouping block 211 serves to reduce the *M* updates to a more feasible number of *N* updates.

In some examples, the grouping block 211 may include an operation to reduce the number of updates by choosing *N* of the *M* updates for further processing. For example, *N* updates may be selected uniformly at random from all *M* updates received from the client nodes 102. This may be relatively simple and quick to implement, however there may be loss of information as a result.

In some examples, the grouping block 211 may include an operation to reduce the number of updates by clustering the *M* updates into *N* groups (or clusters). Various clustering techniques may be used, depending on the application and/or depending on the characteristics of the data (e.g., the shape of the data distribution). Some possible clustering techniques include K-means clustering, mean-shift clustering, Density-Based Spatial Clustering of Applications with Noise (DBSCAN), Expectation-Maximization (EM) clustering using Gaussian Mixture Models (GMM), or agglomerative hierarchical clustering, among other possibilities. Clustering may be performed based on various clustering criterion, and multiple criteria may be used to determine how clusters are formed. Possible criteria for clustering include criteria based on information about the client node that is the source of a given update, such as demographic data associated the client node (e.g., age of the user at the client node), geographical location of the client node, quality and/or speed of wireless connection at the client node, and/or frequency a user interacts with the client node, among other possibilities. Possible clustering criteria may also include criteria based on the local dataset at the client node and/or the update from the client node, such as the data distribution of the local dataset (e.g., represented by statistical measurements such as standard deviation and mean), time span of the local dataset, and/or magnitude of the update (e.g., magnitude of the gradient vector), among other possibilities. Clusters may also be determined based on the domain or context in which the global model is trained. For example, clustering may be based on the native language used at the client nodes, or the application that is used to generate the local dataset. In order to preserve the privacy of the local dataset and the user at the client node, information that may be used for clustering may be self-reported by the client node (e.g., a client node may self-report statistical information about its local dataset, without providing access to the local dataset), may be anonymized or generalized (e.g., the age of the user at the client node may be identified only by a general age range) and/or obtained only by permission (e.g., the location of the client node may only be provided to the central node after obtaining user permission).

After grouping the *M* updates into *N* update clusters, the grouping block 211 determines a group update ${g}_{t}^{i}$ for each cluster, where the group update for a given cluster is a representative of the individual members of the update cluster. Different techniques may be used to determine the group update for each cluster, and the technique that is used may be dependent on the application. For example, a representative group update may be determined by calculating a statistical representation of the cluster (e.g., calculate the group update as an average, median, trimmed median, trimmed mean, or other statistical value of the members of the cluster). In another example, a representative group update may be determined by selecting one member of the cluster as the representative. The selected representative may be selected at random, or the member having minimum distance to all other members may be selected. Other ways to determine the representative group update may be used. The determined set of *N* group updates may then be used to replace the set of *M* originally received updates.

Other techniques for reducing the received set of updates $\left\{g{′}_{t}^{1},…,g{′}_{t}^{M}\right\}$ to a reduced set of updates $\left\{{g}_{t}^{1},…,{g}_{t}^{N}\right\}$ may be used in the grouping block 211. The resulting set of *N* updates is provided to the normalization block 212. As will be discussed further below, in some implementations the normalization block 212 may be optional or may be omitted.

The normalization block 212 includes operations to normalize the updates $\left\{{g}_{t}^{1},…,{g}_{t}^{N}\right\}$ such that the updates all have a norm equal to the same constant (e.g., equal to one). There may be different ways of calculating the norm of each update (and different calculations may be used depending on the format of the update). In the example where each update ${g}_{t}^{i}$ is a gradient vector, the norm of the update (denoted as $\left‖{g}_{t}^{i}\right‖$) may be equivalent to the length of the vector. For example, the normalized update ${\hat{g}}_{t}^{i}$ may be calculated as follows: ${\hat{g}}_{t}^{i} = \frac{{g}_{t}^{i}}{\left‖{g}_{t}^{i}\right‖}$ where the notation ^ indicates a normalized vector.

Normalizing the updates may enable better or optimal performance of MDGA. Without performing normalization, the gradient vector with the smallest norm tends to significantly affect the performance of MDGA. The set of normalized updates is provided to the inner product calculation block 214.

The inner product calculation block 214 includes operations to calculate the inner product between every pair of updates. The inner product of two updates ${g}_{t}^{i}$ and ${g}_{t}^{j}$ may be denoted as *q_{i,j}* (where the subscript *t* has been omitted for simplicity). That is, ${q}_{i , j} = \left〈{g}_{t}^{i}, {g}_{t}^{j}\right〉$. The inner product is calculated for every pair of updates (including self-pairs, where ${q}_{i , i} = \left〈{g}_{t}^{i}, {g}_{t}^{i}\right〉$), to obtain a set of inner products {*q_{i,i},* ... , *q_{N,N}*}.

Calculation of the inner product for a pair of vectors is well-understood (inner product of two vectors is the dot product of the two vectors). In the case where the updates are in the form of matrices, the inner product may be found for a pair of matrices by vectorising the matrices and then calculating the inner product using the result of vectorization. Vectorization of a matrix involves a linear transformation that converts a matrix having *m* rows and *n* columns into a column vector of size *m*x*n.*

The set of inner products {*q_{i,i},* ... , *q_{N,N}*} is provided to the matrix formatting block 216. The matrix formatting block 216 includes operations to reshape the set of inner products into an *N* x *N* matrix. This may be necessary in order for the inner products to be processed by the minimization block 218. In other examples, formatting into a matrix may not be required, in which case the matrix formatting block 216 may be optional or may be omitted.

The matrix formatting block 216 may include operations to create a matrix *Q,* having *N* rows and *N* columns, where the *i,j*-th inner product *q_{i,j}* is the *i,j*-th entry in the matrix *Q* (i.e., the entry in the *i*-th column and the *j*-th row). The matrix *Q* is provided to the minimization block 218.

The minimization block 218 includes operations to solve the minimization problem:

| | |
|---|---|
| minimize *α^{T} Qα* | subject to ∑*ᵢ αᵢ* = 1, *αᵢ* ≥ 0 for all *i* |

This minimization is based on MGDA, and may be solved by any suitable optimization solver, such as Frank-Wolfe type solver or other convex optimization solver as discussed above. The result of solving this minimization is the set of coefficients $\left\{{α}_{t}^{1},…,{α}_{t}^{N}\right\}$, which is provided to the aggregation and update block 220. The operation of the aggregation and update block 220 has been discussed above.

In some examples, the operations of blocks 214, 216, 218 may be performed by a single MGDA block. In some examples, instead of using MGDA as the technique for multi-objective optimization, some other multi-objective optimization technique may be used, provided the goal to direct the solution towards a Pareto-stationary solution is satisfied.

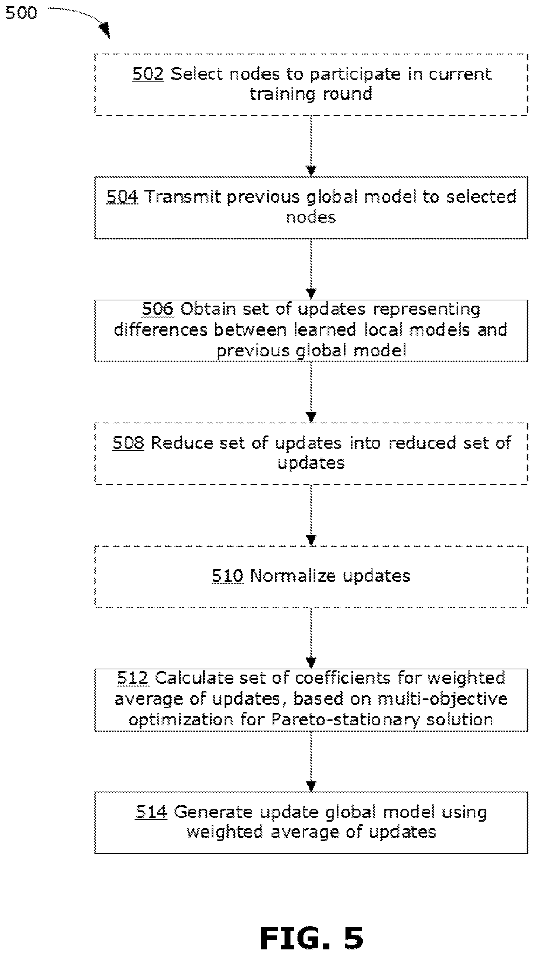

FIG. 5 is a flowchart illustrating an example method 500 of using FL to learn a global model for a particular task. The method 500 may be implemented by the central node 110 (e.g., using the federated learning system 200 described above). The method 500 may be used to perform part or all of a single round of training, for example. The method 500 may be used during the training phase, after the initialization phase has been completed.

Optionally, at 502, a plurality of client nodes 102 are selected to participate in the current round of training. The client nodes 102 may be selected at random from the total client nodes 102 available. The client nodes 102 may be selected such that a certain predefined number (e.g., 1000 client nodes) or certain predefined fraction (e.g., 10% of all client nodes) of client nodes 102 participate in the current round of training. Selection of client nodes 102 may be based on predefined criteria, such as selecting only client nodes 102 that did not participate in an immediately previous round of training, selecting client nodes 102 to ensure a minimum coverage of different demographic groups (e.g., ensuring there is at least one client node 102 from each of several predefined geographic areas), etc.

In some example embodiments, selection of client nodes 102 may be performed outside of the method 500 (e.g., the method 500 may be used only for a later portion of the round of training), or may be performed by another entity other than the central node 110 (e.g., the client nodes 102 may be self-selecting, or may be selected by a scheduler at another network node).

In some example embodiments, selection of client node 102 may not be performed at all (or in other words, all client nodes are selected client nodes), and all client nodes 102 that participate in training the global model also participate in every round of training.

At 504, information about the previous global model *wₜ₋₁* (e.g., the parameters of the previously global model *wₜ₋₁*) is transmitted to the selected client nodes 102. The previous global model may be the result of a previous round of training. In the special case of the first round of training (i.e., immediately following the initialization phase), it may not be necessary for the central node 110 to transmit the global model parameters to the selected client nodes 102 because the central node 110 and all client nodes 102 should have the same initial model parameters after initialization.

Each of the selected client nodes 102, update its respective local model using the parameters of the previous global model received from the central node 110. Each of the selected client nodes 102 then performs training of its respective local model using a machine learning algorithm and the respective local datasets to learn the local parameters for the respective local models. Each selected client node 102 calculates an update to the global model (e.g., by calculating a gradient vector representing a difference between the set of local parameters and the received set of parameters of the previous global model).

At 506, a set of updates (e.g., a set of gradient vectors $\left\{{g}_{t}^{1},…,{g}_{t}^{N}\right\}$ as discussed above) is obtained. The updates represent respective differences (or gradients) between the model parameters of the respective learned local models and the previous global model. In some example embodiments, instead of respective updates being received from respective selected client nodes 102 (e.g., each *i*-th client node 102 calculates the respective gradient vector ${g}_{t}^{i}$ and transmits this to the central node 110), the central node 110 may calculate the respective updates after receiving the parameters (e.g., weights) of respective local models from respective selected client nodes 102.

Optionally, at 508, the number of updates in the obtained set of updates may be reduced to a reduced set of updates. This reduction may be performed by the grouping block 211, for example using clustering or simple selection as discussed above. In some examples, reducing the number of updates may not be performed (e.g., if the number of updates obtained at 506 does not exceed a predefined threshold, or if the number of selected client nodes is intentionally selected to be of acceptable size).

In some examples, reducing the number of updates may be performed prior to obtaining the updates at 506. For example, if the client nodes 102 transmit respective sets of local parameters, the number of sets of local parameters may be reduced (e.g., by the grouping block 211, by another entity outside of the central node 110, or by a block outside of the federated learning system 200) prior to calculating the set of updates (e.g., gradient vectors).

Optionally, at 510, the updates are normalized (e.g., using the normalization block 212) to a set of normalized updates. In some examples, normalization may be omitted from the method 500 (in which case the normalization block 212 may be optional or may be omitted from the federated learning system 200). For example, normalization may be performed at the client nodes 102 before sending information to the central node 110 (such that the updates obtained at 506 are already normalized); or updates may be normalized by another entity outside of the central node 110, or by a block outside of the federated learning system 200. In some examples, normalization may not be required. In some examples, optional step 510 may be performed before option step 508.

At 512, a set of weighting coefficients (or simply "coefficients") for calculating a weighted average of updates (which will be used to update the global model) is calculated. As discussed above, the set of coefficients $\left\{{α}_{t}^{1},…,{α}_{t}^{N}\right\}$ are calculated by performing multi-object optimization in order drive towards a Pareto-stationary solution for the global model. MGDA may be used to calculate the set of coefficients, as discussed above (e.g., using blocks 214, 216, 218).

At 514, the set of coefficients is used to calculate a weighted average of the updates, and applied to generate an updated global model, for example by adding the weighted average of the updates to the global model as discussed above (e.g., using aggregation and update block 220).

The updated global model *wₜ* learned during the current round of training is stored. In particular, the set of parameters (e.g., weights) of the learned global model *wₜ* may be stored. The set of parameters of the learned global model *wₜ* may be further updated in a subsequent round of training (for example, by repeating at least some of the steps of the method 500). If the learned global model *wₜ* has converged to an acceptable solution (or the FL of the global model ends for any other reason, such as reaching a predefined computational time or satisfying some other predefined end condition), the learned global model *wₜ* may be deployed to the client nodes 102 for inference. The learned global model *wₜ* may be continuously updated using FL, as new local data is collected at the client nodes 102.

It has been found, in various simulations, that the example FL method described herein achieve faster convergence and higher accuracy of the global model, compared to a conventional FedAvg approach to FL.

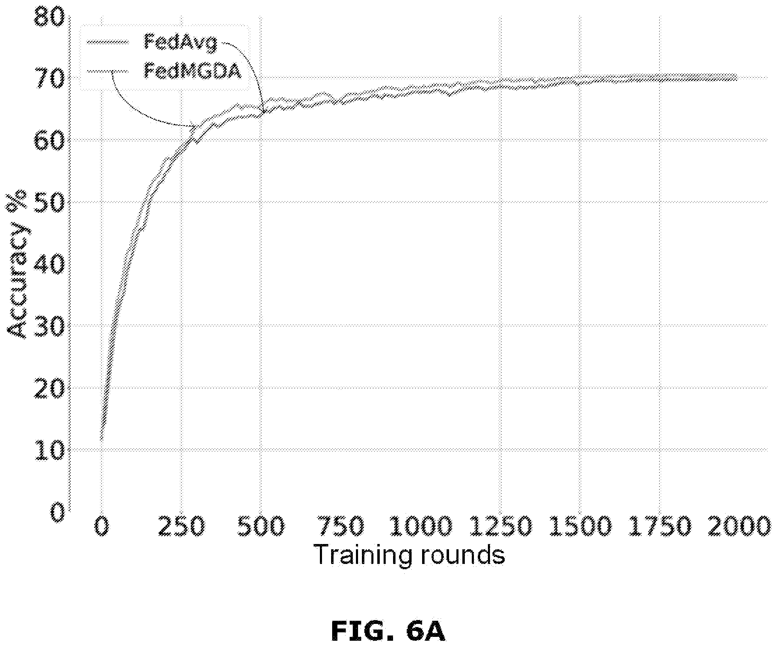

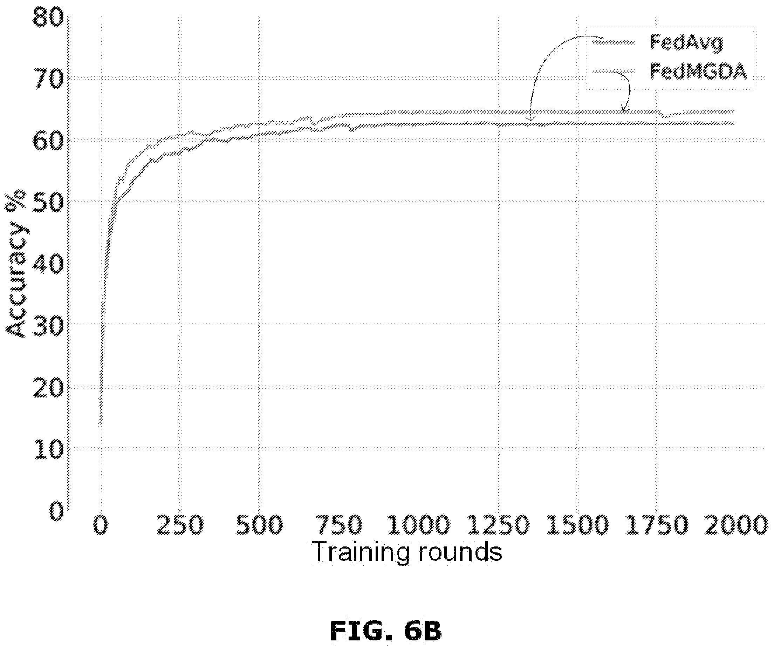

FIGS. 6A and 6B illustrate some results of simulations comparing an example of the FL method of the present disclosure (labeled as "FedMDGA" in FIGS. 6A and 6B) with a conventional FedAvg approach. These results plot the accuracy of the global model (compared with a known model) over a number of rounds of training. FIG. 6A shows simulation results where local 1 epoch is used for training the local model; FIG. 6B shows simulation results where local 15 epochs are used for training the local model. As shown in these figures, simulations illustrate the ability of the FL method disclosed herein to achieve a global model that converges faster (requiring fewer rounds of training) and also achieves a higher accuracy.

The examples described herein may be implemented in a central node 110, using FL to learn a global model. Although referred to as a global model, it should be understood that the global model at the central node 110 is only global in the sense that it has been learned to work well across all the client nodes 102 involved in the learning the global model. The global model may also be referred to as a general model. A learned global model may continue to be updated using FL, as new data is collected at the client nodes 102. In some examples, a global model learned at the central node 110 may be passed up to a higher hierarchical level (e.g., to a core server), for example in hierarchical FL.

The examples described herein may be implemented using existing FL architecture. It may not be necessary to modify the operation of the client nodes 102, and the client nodes 102 need not be aware of how FL is implemented at the central node 110. At the central node 110, examples described herein may be readily implemented by the introduction of the Pareto-stationary based coefficient calculation operations.

The examples described herein may be adapted for use in different applications. In particular, the disclosed examples may enable FL to be practically applied to real-life problems and situations.

For example, because FL enables learning of model for a particular task without violating the privacy of the client nodes, the present disclosure may be used for learning a model for a particular task using data collected at end users' devices, such as smartphones. FL may be used to learn a model for predictive text entry, for image recommendation, or for implementing personal voice assistants (e.g., learning a conversational model), for example.

The disclosed examples may also enable FL to be used in the context of communication networks. For example, end users browsing the internet or using different online applications generate a large amount of data. Such data may be important for network operators for different reasons, such as network monitoring, and traffic shaping. FL may be used to learn a model for performing traffic classification using such data, without violating a user's privacy. In a wireless network, different BSs can perform local training of the model, using, as their local dataset, data collected from wireless user equipment.

Other applications of the present disclosure include application in the context of autonomous driving (e.g., autonomous vehicles may provide data to learn an up-to-date model of traffic, construction, or pedestrian behavior, to promote safe driving), or in the context of a network of sensors (e.g., individual sensors may perform local training of the model, to avoid sending large amounts of data back to the central node).

In various examples, the present disclosure describes methods, apparatuses and systems to enable real-world deployment of FL. The goals of low communication cost and fairness among users, which are desirable for practical use of FL, may be achieved by the disclosed examples, while maintaining accuracy of the learned model at an acceptable level.

The disclosed FL method may provide advantages over the conventional FedAvg approach. For example, it has been found in simulations that the disclosed FL method converges faster and to a better solution (in terms of accuracy) compared to the standard FedAvg FL method. The associated reduction in communication costs (due to reduction in the number of training rounds required) may result in reduction of operational costs (at the central node and/or in the overall network).

As explained above, the disclosed FL method enables the learned global model to converge to a Pareto-stationary solution (e.g., using MGDA approach, which may be referred to as FedMDGA). A Pareto-stationary solution means that the learned global model is fair for every client node and does not discriminate against any client node. This fairness may also help to encourage participation of individual client nodes in the FL process.

Although the present disclosure describes methods and processes with steps in a certain order, one or more steps of the methods and processes may be omitted or altered as appropriate. One or more steps may take place in an order other than that in which they are described, as appropriate.

Although the present disclosure is described, at least in part, in terms of methods, a person of ordinary skill in the art will understand that the present disclosure is also directed to the various components for performing at least some of the aspects and features of the described methods, be it by way of hardware components, software or any combination of the two. Accordingly, the technical solution of the present disclosure may be embodied in the form of a software product. A suitable software product may be stored in a pre-recorded storage device or other similar non-volatile or non-transitory computer readable medium, including DVDs, CD-ROMs, USB flash disk, a removable hard disk, or other storage media, for example. The software product includes instructions tangibly stored thereon that enable a processing device (e.g., a personal computer, a server, or a network device) to execute examples of the methods disclosed herein. The machine-executable instructions may be in the form of code sequences, configuration information, or other data, which, when executed, cause a machine (e.g., a processor or other processing device) to perform steps in a method according to examples of the present disclosure.

All values and sub-ranges within disclosed ranges are also disclosed. Also, although the systems, devices and processes disclosed and shown herein may comprise a specific number of elements/components, the systems, devices and assemblies could be modified to include additional or fewer of such elements/components. For example, although any of the elements/components disclosed may be referenced as being singular, the embodiments disclosed herein could be modified to include a plurality of such elements/components. The subject matter described herein intends to cover and embrace all suitable changes in technology.

## Claims

1. An apparatus (110) comprising:
a memory (128) storing a global model; and
a processing device (114) in communication with the memory (128), the processing device (114) configured to execute instructions to cause the apparatus (110) to:
obtain a set of updates, each update representing a respective difference between the global model and a respective local model learned at a respective client node (102);
update the global model using a weighted average of the set of updates, by:
calculating a set of weighting coefficients to be used in calculating the weighted average of the set of updates;
calculating the weighted average of the set of updates by applying the set of weighting coefficients to the set of updates; and
generating an updated global model by adding the weighted average of the set of updates to the global model; and
store the updated global model in the memory (128);
the apparatus (110) **characterised in that** the instructions cause the apparatus (110) to calculate the set of weighting coefficients by performing multi-objective optimization towards a Pareto-stationary solution across the set of updates, each objective of the multi-objective optimization being minimization of a loss function of a respective client node (102).

2. The apparatus (110) of claim 1, wherein the processing device (114) is configured to execute instructions to cause the apparatus (110) to perform multi-objective optimization to calculate the set of weighting coefficients by using a multiple gradient descent algorithm (MGDA) towards the Pareto-stationary solution.

3. The apparatus (110) of claim 1 or 2, wherein the processing device (114) is configured to execute instructions to further cause the apparatus (110) to:
prior to calculating the set of weighting coefficients, normalize each update in the set of updates.

4. The apparatus (110) of any one of claims 1 to 3, the processing device (114) is configured to execute instructions to further cause the apparatus (110) to:
prior to calculating the set of weighting coefficients, reduce a total number of updates in the set of updates.

5. The apparatus (110) of claim 4, wherein the processing device (114) is configured to execute instructions to further cause the apparatus (110) to reduce the total number of updates in the set of updates by:
clustering the updates in the set of updates into a plurality of update clusters;
determining, for each given update cluster, a group update representative of individual updates within the given update cluster; and
replacing the updates in the set of updates with the determined group updates.

6. The apparatus (110) of any one of claims 1 to 5, wherein the processing device (114) is configured to execute instructions to further cause the apparatus (110) to:
select a set of respective client nodes (102) from which to obtain the set of updates.

7. A computer-implemented method for learning a global model using federated learning, the method comprising:
obtaining a set of updates, each update representing a respective difference between a stored global model and a respective local model learned at a respective client node (102);
updating the global model using a weighted average of the set of updates, by:
calculating a set of weighting coefficients to be used in calculating the weighted average of the set of updates;
calculating the weighted average of the set of updates by applying the set of weighting coefficients to the set of updates;
generating an updated global model by adding the weighted average of the set of updates to the global model; and
storing the updated global model
the method **characterised in that** the set of weighting coefficients are calculated by performing multi-objective optimization towards a Pareto-stationary solution across the set of updates, each objective of the multi-objective optimization being minimization of a loss function of a respective client node (102).

8. The computer-implemented method of claim 7, wherein performing multi-objective optimization to calculate the set of weighting coefficients comprises using a multiple gradient descent algorithm (MGDA) towards the Pareto-stationary solution.

9. The computer-implemented method of claim 7 or 8, further comprising:
prior to calculating the set of weighting coefficients, normalizing each update in the set of updates.

10. The computer-implemented method of any one of claims 7 to 8, further comprising:
prior to calculating the set of weighting coefficients, reducing a total number of updates in the set of updates.

11. The computer-implemented method of claim 10, wherein reducing the total number of updates in the set of updates comprises:
clustering the updates into a plurality of update clusters;
determining, for each given update cluster, a group update representative of individual updates within the given update cluster; and
replacing the updates in the set of updates with the determined group updates.

12. The computer-implemented method of any one of claims 7 to 11, further comprising:
selecting a set of respective client nodes from which to obtain the set of updates;
transmitting the updated global model to the selected client nodes (102); and
repeating the obtaining, updating, and selecting to further update the updated global model;
wherein the transmitting and repeating is further repeated until a predefined end condition is satisfied.

13. The computer-implemented method of any one of claims 7 to 12, wherein obtaining the set of updates comprises:
receiving, from the respective client nodes (102), the respective learned local models; and
calculating the set of updates, wherein each update is calculated as the respective difference between the respective learned local model and the global model.

14. The computer-implemented method of any one of claims 7 to 13, wherein the set of updates comprises a set of gradient vectors, each gradient vector representing the respective difference between the respective learned local model and the global model.

15. A computer program comprising instructions which, when executed by a processing device (114) of an apparatus (110), cause the apparatus (110) to perform the method of any one of claims 7 to 14.

## Patentansprüche

1. Vorrichtung (110), umfassend:
ein Speicher (128), der ein globales Modell speichert; und
eine Verarbeitungseinrichtung (114) in Kommunikation mit dem Speicher (128), wobei die Verarbeitungseinrichtung (114) dazu konfiguriert ist, Anweisungen auszuführen, um zu bewirken, dass die Vorrichtung (110):
einen Satz von Aktualisierungen erlangt, wobei jede Aktualisierung eine entsprechende Differenz zwischen dem globalen Modell und einem entsprechenden lokalen Modell darstellt, das an einem entsprechenden Client-Knoten (102) gelernt wurde;
das globale Modell unter Verwendung eines gewichteten Durchschnitts des Satzes von Aktualisierungen aktualisiert, durch:
Berechnen eines Satzes von Gewichtungskoeffizienten, die beim Berechnen des gewichteten Durchschnitts des Satzes von Aktualisierungen zu verwenden ist;
Berechnen des gewichteten Durchschnitts des Satzes von Aktualisierungen durch Anwenden des Satzes von Gewichtungskoeffizienten auf den Satz von Aktualisierungen; und Erzeugen eines aktualisierten globalen Modells durch Addieren des gewichteten Durchschnitts des Satzes von Aktualisierungen mit dem globalen Modell; und
das aktualisierte globale Modell in dem Speicher (128) speichert;
wobei die Vorrichtung (110) **dadurch gekennzeichnet ist, dass** die Anweisungen bewirken, dass die Vorrichtung (110) den Satz von Gewichtungskoeffizienten durch Durchführen einer Mehrzieloptimierung in Richtung einer Pareto-stationären Lösung über den Satz von Aktualisierungen hinweg berechnet, wobei jedes Ziel der Mehrzieloptimierung eine Minimierung einer Verlustfunktion eines jeweiligen Client-Knotens (102) ist.

2. Vorrichtung (110) nach Anspruch 1, wobei die Verarbeitungsvorrichtung (114) dazu konfiguriert ist, Anweisungen auszuführen, um zu bewirken, dass die Vorrichtung (110) eine Mehrzieloptimierung durchführt, um den Satz von Gewichtungskoeffizienten unter Verwendung eines Algorithmus mit mehrfachem Gradientenabstieg (MGDA) in Richtung der Pareto-stationären Lösung zu berechnen.

3. Vorrichtung (110) nach Anspruch 1 oder 2, wobei die Verarbeitungseinrichtung (114) dazu konfiguriert ist, Anweisungen auszuführen, um ferner zu bewirken, dass die Vorrichtung (110):
vor dem Berechnen des Satzes von Gewichtungskoeffizienten jede Aktualisierung in dem Satz von Aktualisierungen normalisiert.

4. Vorrichtung (110) nach einem der Ansprüche 1 bis 3, wobei die Verarbeitungseinrichtung (114) dazu konfiguriert ist, Anweisungen auszuführen, um ferner zu bewirken, dass die Vorrichtung (110):
vor dem Berechnen des Satzes von Gewichtungskoeffizienten eine Gesamtanzahl von Aktualisierungen in dem Satz von Aktualisierungen reduziert.

5. Vorrichtung (110) nach Anspruch 4, wobei die Verarbeitungseinrichtung (114) dazu konfiguriert ist, Anweisungen auszuführen, um ferner zu bewirken, dass die Vorrichtung (110) die Gesamtanzahl von Aktualisierungen in dem Satz von Aktualisierungen reduziert, durch:
Clustern der Aktualisierungen in dem Satz von Aktualisierungen in eine Vielzahl von Aktualisierungsclustern;
Bestimmen einer Gruppenaktualisierung für jeden gegebenen Aktualisierungscluster, die individuelle Aktualisierungen innerhalb des gegebenen Aktualisierungsclusters repräsentiert; und
Ersetzen der Aktualisierungen in dem Satz von Aktualisierungen durch die bestimmten Gruppenaktualisierungen.

6. Vorrichtung (110) nach einem der Ansprüche 1 bis 5, wobei die Verarbeitungseinrichtung (114) dazu konfiguriert ist, Anweisungen auszuführen, um ferner zu bewirken, dass die Vorrichtung (110):
einen Satz von jeweiligen Client-Knoten (102) auswählt, aus welchen der Satz von Aktualisierungen zu erlangen ist.

7. Computerimplementiertes Verfahren zum Lernen eines globalen Modells unter Verwendung von föderiertem Lernen, wobei das Verfahren Folgendes umfasst:
Erlangen eines Satzes von Aktualisierungen, wobei jede Aktualisierung eine entsprechende Differenz zwischen einem gespeicherten globalen Modell und einem jeweiligen lokalen Modell darstellt, das an einem jeweiligen Client-Knoten (102) gelernt wurde;
Aktualisieren des globalen Modells unter Verwendung eines gewichteten Durchschnitts des Satzes von Aktualisierungen durch:
Berechnen eines Satzes von Gewichtungskoeffizienten, die beim Berechnen des gewichteten Durchschnitts des Satzes von Aktualisierungen zu verwenden ist;
Berechnen des gewichteten Durchschnitts des Satzes von Aktualisierungen durch Anwenden des Satzes von Gewichtungskoeffizienten auf den Satz von Aktualisierungen;
Erzeugen eines aktualisierten globalen Modells durch Addieren des gewichteten Durchschnitts des Satzes von Aktualisierungen mit dem globalen Modell; und
Speichern des aktualisierten globalen Modells,
wobei das Verfahren **dadurch gekennzeichnet ist, dass** der Satz von Gewichtungskoeffizienten durch Durchführen einer Mehrzieloptimierung in Richtung einer Pareto-stationären Lösung über den Satz von Aktualisierungen hinweg berechnet wird, wobei jedes Ziel der Mehrzieloptimierung eine Minimierung einer Verlustfunktion eines jeweiligen Client-Knotens (102) ist.

8. Computerimplementiertes Verfahren nach Anspruch 7, wobei das Durchführen einer Mehrzieloptimierung zum Berechnen des Satzes von Gewichtungskoeffizienten das Verwenden eines Algorithmus mit mehrfachem Gradientenabstieg (MGDA) in Richtung der Pareto-stationären Lösung umfasst.

9. Computerimplementiertes Verfahren nach Anspruch 7 oder 8, ferner umfassend:
vor dem Berechnen des Satzes von Gewichtungskoeffizienten,
Normalisieren jeder Aktualisierung in dem Satz von Aktualisierungen.

10. Computerimplementiertes Verfahren nach einem der Ansprüche 7 bis 8, ferner umfassend:
vor dem Berechnen des Satzes von Gewichtungskoeffizienten, Reduzieren einer Gesamtanzahl von Aktualisierungen in dem Satz von Aktualisierungen.

11. Computerimplementiertes Verfahren nach Anspruch 10, wobei das Reduzieren der Gesamtzahl von Aktualisierungen in dem Satz von Aktualisierungen Folgendes umfasst:
Clustern der Aktualisierungen in eine Vielzahl von Aktualisierungsclustern;
Bestimmen einer Gruppenaktualisierung für jeden gegebenen Aktualisierungscluster, die individuelle Aktualisierungen innerhalb des gegebenen Aktualisierungsclusters repräsentiert;
und
Ersetzen der Aktualisierungen in dem Satz von Aktualisierungen durch die bestimmten Gruppenaktualisierungen.

12. Computerimplementiertes Verfahren nach einem der Ansprüche 7 bis 11, ferner umfassend:
Auswählen eines Satzes von jeweiligen Client-Knoten, aus welchen der Satz von Aktualisierungen zu erlangen ist;
Übertragen des aktualisierten globalen Modells an die ausgewählten Client-Knoten (102); und
Wiederholen des Erlangens, Aktualisierens und Auswählens, um das aktualisierte globale Modell weiter zu aktualisieren;
wobei das Übertagen und Wiederholen ferner wiederholt wird, bis eine vordefinierte Endbedingung erfüllt ist.

13. Computerimplementiertes Verfahren nach einem der Ansprüche 7 bis 12, wobei das Erlangen des Satzes von Aktualisierungen Folgendes umfasst:
Empfangen der jeweiligen gelernten lokalen Modelle aus dem jeweiligen Client-Knoten (102); und
Berechnen des Satzes von Aktualisierungen, wobei jede Aktualisierung als die jeweilige Differenz zwischen dem jeweiligen gelernten lokalen Modell und dem globalen Modell berechnet wird.

14. Computerimplementiertes Verfahren nach einem der Ansprüche 7 bis 13, wobei der Satz von Aktualisierungen einen Satz von Gradientenvektoren umfasst, wobei jeder Gradientenvektor die jeweilige Differenz zwischen dem jeweiligen gelernten lokalen Modell und dem globalen Modell darstellt.

15. Computerprogramm, umfassend Anweisungen, welche bei Ausführung durch eine Verarbeitungseinrichtung (114) einer Vorrichtung (110) bewirken, dass die Vorrichtung (110) das Verfahren nach einem der Ansprüche 7 bis 14 durchführt.

## Revendications

1. Appareil (110) comprenant :
une mémoire (128) stockant un modèle global ; et
un dispositif de traitement (114) en communication avec la mémoire (128), le dispositif de traitement (114) étant configuré pour exécuter des instructions pour amener l'appareil (110) à :
obtenir un ensemble de mises à jour, chaque mise à jour représentant une différence respective entre le modèle global et un modèle local respectif appris au niveau d'un nœud client respectif (102) ;
mettre à jour le modèle global à l'aide d'une moyenne pondérée de l'ensemble de mises à jour, en :
calculant un ensemble de coefficients de pondération destiné à être utilisé lors du calcul de la moyenne pondérée de l'ensemble de mises à jour ;
en calculant la moyenne pondérée de l'ensemble de mises à jour en appliquant l'ensemble de coefficients de pondération à l'ensemble de mises à jour ; et
en générant un modèle global mis à jour en ajoutant la moyenne pondérée de l'ensemble de mises à jour au modèle global ; et
en stockant le modèle global mis à jour dans la mémoire (128) ; l'appareil (110) étant **caractérisé en ce que** les instructions amènent l'appareil (110) à calculer l'ensemble de coefficients de pondération en réalisant une optimisation multi-objectif vers une solution Pareto-stationnaire sur l'ensemble de mises à jour, chaque objectif de l'optimisation multi-objectif étant la minimisation d'une fonction de perte d'un nœud client respectif (102).

2. Appareil (110) selon la revendication 1, dans lequel le dispositif de traitement (114) est configuré pour exécuter des instructions pour amener l'appareil (110) à réaliser une optimisation multi-objectif pour calculer l'ensemble de coefficients de pondération en utilisant un algorithme de descente à gradients multiples (MGDA) vers la solution Pareto-stationnaire.

3. Appareil (110) selon la revendication 1 ou 2, dans lequel le dispositif de traitement (114) est configuré pour exécuter des instructions pour amener en outre l'appareil (110) à :
avant de calculer l'ensemble de coefficients de pondération, normaliser chaque mise à jour dans l'ensemble de mises à jour.

4. Appareil (110) selon l'une quelconque des revendications 1 à 3, le dispositif de traitement (114) est configuré pour exécuter des instructions pour amener en outre l'appareil (110) à :
avant de calculer l'ensemble de coefficients de pondération, réduire le nombre total de mises à jour dans l'ensemble de mises à jour.

5. Appareil (110) selon la revendication 4, dans lequel le dispositif de traitement (114) est configuré pour exécuter des instructions pour amener en outre l'appareil (110) à réduire le nombre total de mises à jour dans l'ensemble de mises à jour en :
regroupant les mises à jour dans l'ensemble de mises à jour en une pluralité de groupes de mises à jour ;
en déterminant, pour chaque groupe de mises à jour donné, une mise à jour de groupe représentative de mises à jour individuelles au sein du groupe de mises à jour donné ; et
en remplaçant les mises à jour dans l'ensemble de mises à jour par les mises à jour de groupe déterminées.

6. Appareil (110) selon l'une quelconque des revendications 1 à 5, dans lequel le dispositif de traitement (114) est configuré pour exécuter des instructions pour amener en outre l'appareil (110) à :
sélectionner un ensemble de nœuds clients respectifs (102) à partir duquel obtenir l'ensemble de mises à jour.

7. Procédé mis en œuvre par ordinateur d'apprentissage d'un modèle global à l'aide de l'apprentissage fédéré, le procédé comprenant :
l'obtention d'un ensemble de mises à jour, chaque mise à jour représentant une différence respective entre un modèle global stocké et un modèle local respectif appris au niveau d'un nœud client respectif (102) ;
la mise à jour du modèle global à l'aide d'une moyenne pondérée de l'ensemble de mises à jour, en :
calculant un ensemble de coefficients de pondération destiné à être utilisé lors du calcul de la moyenne pondérée de l'ensemble de mises à jour ;
en calculant la moyenne pondérée de l'ensemble de mises à jour en appliquant l'ensemble de coefficients de pondération à l'ensemble de mises à jour ;
en générant un modèle global mis à jour en ajoutant la moyenne pondérée de l'ensemble de mises à jour au modèle global ; et
en stockant le modèle global mis à jour
le procédé étant **caractérisé en ce que** l'ensemble de coefficients de pondération sont calculés en réalisant une optimisation multi-objectif vers une solution Pareto-stationnaire sur l'ensemble de mises à jour, chaque objectif de l'optimisation multi-objectif étant la minimisation d'une fonction de perte d'un nœud client respectif (102).

8. Procédé mis en œuvre par ordinateur selon la revendication 7, dans lequel la réalisation d'une optimisation multi-objectif pour calculer l'ensemble de coefficients de pondération comprend l'utilisation d'un algorithme de descente à gradients multiples (MGDA) vers la solution Pareto-stationnaire.

9. Procédé mis en œuvre par ordinateur selon la revendication 7 ou 8, comprenant en outre :
avant de calculer l'ensemble de coefficients de pondération, la normalisation de chaque mise à jour dans l'ensemble de mises à jour.

10. Procédé mis en œuvre par ordinateur selon l'une quelconque des revendications 7 et 8, comprenant en outre :
avant de calculer l'ensemble de coefficients de pondération, la réduction d'un nombre total de mises à jour dans l'ensemble de mises à jour.

11. Procédé mis en œuvre par ordinateur selon la revendication 10, dans lequel la réduction du nombre total de mises à jour dans l'ensemble de mises à jour comprend :
le regroupement des mises à jour en une pluralité de groupes de mises à jour ;
la détermination, pour chaque groupe de mises à jour donné, d'une mise à jour de groupe représentative de mises à jour individuelles au sein du groupe de mises à jour donné ; et
le remplacement des mises à jour dans l'ensemble de mises à jour par les mises à jour de groupe déterminées.

12. Procédé mis en œuvre par ordinateur selon l'une quelconque des revendications 7 à 11, comprenant en outre :
la sélection d'un ensemble de nœuds clients respectifs à partir duquel obtenir l'ensemble de mises à jour ;
la transmission du modèle global mis à jour aux nœuds clients sélectionnés (102) ; et
la répétition des étapes d'obtention, de mise à jour et de sélection pour mettre davantage à jour le modèle global mis à jour ;
dans lequel les étapes de transmission et de répétition sont davantage répétées jusqu'à ce qu'une condition de fin prédéfinie soit satisfaite.

13. Procédé mis en œuvre par ordinateur selon l'une quelconque des revendications 7 à 12, dans lequel l'obtention de l'ensemble de mises à jour comprend :
la réception, en provenance des nœuds clients respectifs (102), des modèles locaux appris respectifs ; et
le calcul de l'ensemble de mises à jour, dans lequel chaque mise à jour est calculée en tant que différence respective entre le modèle local appris respectif et le modèle global.

14. Procédé mis en œuvre par ordinateur selon l'une quelconque des revendications 7 à 13, dans lequel l'ensemble de mises à jour comprend un ensemble de vecteurs de gradient, chaque vecteur de gradient représentant la différence respective entre le modèle local appris respectif et le modèle global.

15. Programme informatique comprenant des instructions qui, lorsqu'elles sont exécutées par un dispositif de traitement (114) d'un appareil (110), amènent l'appareil (110) à réaliser le procédé selon l'une quelconque des revendications 7 à 14.
